# EUROPEAN PATENT SPECIFICATION

(11) **EP 2 446 154 B1**
(45) Date of publication and mention of the grant of the patent: **26.04.2017**
(21) Application number: 10735061.3
(22) Date of filing: 17.06.2010
(51) Int. Cl.: F16B 12/12, F16B 12/46, F16B 12/26

(54) **BRACKET ASSEMBLY AND METHOD OF USE THEREOF**
HALTERUNGSANORDNUNG UND ANWENDUNGSVERFAHREN DAFÜR
ENSEMBLE SUPPORT ET PROCÉDÉ D'UTILISATION

(30) Priority: 22.06.2009 GB 0910796; 30.11.2009 GB 0920931
(43) Date of publication of application: 02.05.2012
(60) Divisional application: 16163222.9
(73) Proprietor: Crampton, David, Bradford, Yorkshire BD22 0DZ (GB)
(72) Inventor: Crampton, David, Bradford, Yorkshire BD22 0DZ (GB)
(74) Representative: Tomkinson, Alexandra
(86) International application number: PCT/GB2010/051004
(87) International publication number: WO 2010/149997

(56) References cited:
- EP-A1- 0 016 618
- WO-A1-84/02959
- WO-A1-2006/089539
- DE-A1- 3 438 854
- DE-U1- 29 921 961
- FR-A- 926 527
- FR-A- 1 275 182
- FR-A1- 2 596 824
- FR-A1- 2 996 610
- FR-A7- 2 258 775
- GB-A- 1 422 116
- US-A- 1 062 456
- US-A- 3 113 358
- US-A- 3 403 641
- US-A- 3 618 993
- US-A- 3 675 955
- US-A- 4 148 454
- US-A- 5 718 493
- US-A1- 2001 015 600
- US-A1- 2010 176 268

## Description

This invention relates to a bracket assembly and a method of use thereof.

Although the following description refers almost exclusively to a bracket assembly for allowing a furniture plinth to be attached to an end panel of a furniture unit, such as in a domestic kitchen, it will be appreciated that the bracket assembly can be used for connecting any two or more items together in any suitable application, either in an external and/or internal joint.

Furniture plinths or kickboards are typically elongate strips of material located between a floor surface and a base of a furniture unit located on the floor surface. The plinth hides the space between the base of the furniture unit and the floor surface and provides a more finished and aesthetically pleasing appearance. Plinths or kickboards are most commonly used in a domestic kitchen.

Conventionally most kitchen plinths are held in place via friction fit. Thus, the dimensions of the kitchen plinth are only slightly smaller than the space defined between the base of the kitchen unit and the floor surface and the snug fit formed when placing the plinth in said space maintains the plinth in position. However, the plinths can be easily knocked over during use, such as for example by a person accidentally kicking the same. In addition, the plinths are often not placed in a correct alignment, thereby reducing the aesthetic effect of the same, and an unsightly gap is often left between the end of the plinth and an end panel of the furniture unit.

In an attempt to overcome at least some of the abovementioned problems, it is known to provide clips which have a first attachment portion for attaching to a support leg of the furniture unit located between the base of the furniture unit and the floor surface, and a second attachment portion for attaching to a rear surface of the plinth. This helps to retain the plinth in position and reduces the likelihood of the same being accidentally kicked over. However, the clips do not solve the problem of providing correct alignment of the plinth in the space and do not prevent a gap being formed between the end of the plinth and the end panel of the furniture unit.

US3618993 discloses a clip assembly including male and female clip elements including cooperating locking means. Pockets are provided on the female clip elements into which clips on the male clip elements are engaged in use. The clip assembly allows items to which the clips are engaged to in use to be brought together in abutting relationship.FR2596824 discloses a bracket assembly similar to the one of the invention.

It is therefore an aim of the present invention to provide a bracket assembly which overcomes the abovementioned problems.

It is an aim of the present invention to provide a bracket assembly which provides a snug fit and improved alignment between two or more items being joined together via the bracket assembly.

It is a further aim of the present invention to provide a method of using a bracket assembly.

According to a first aspect of the present invention there is provided a bracket assembly according to claim 1.

The dimensions of the recess and the protrusion member are preferably such that a snug fit is formed when the protrusion member is engaged in the recess. Thus, the dimensions of the protrusion member are typically substantially equal to or only slightly smaller than the dimensions of the recess.

In one embodiment the protrusion member of the second bracket part is detachably engaged in the recess of the first bracket part.

In one embodiment the end sections protrude outwardly at opposite ends of the recess.

The first bracket part has an upper surface and a lower surface and at least part of the recess is defined in or adjacent the lower surface. Preferably an opening of the recess is substantially flush with or defined in the lower surface.

The securing means of the first bracket part are located at or adjacent the two ends of the same or in the end sections of the lower surface so as not to interfere with the recess defined in the first bracket part in one example.

In one embodiment the second bracket part is substantially L-shaped in form.

Preferably the attachment member and/or protrusion member are plate like or substantially planar members.

The depth of the first recess portion (i.e. the dimensions or distance of the recess between the upper and lower surfaces of the first bracket part) is equal to the depth or thickness of the protrusion member (i.e. the dimensions or distance of the protrusion member from an upper surface to a lower surface thereof). This results in the lower surface of the protrusion member being substantially flush with the lower surface of the first bracket part when fitted, thereby creating a snug fit in use.

The depth of the second recess portion (i.e. the distance or dimensions of the recess between the side edge of the first bracket part and the base of said second recess portion in the upper surface) is equal to the depth of thickness of the attachment member (i.e. the dimensions or distance of the attachment member from a front surface to a rear surface thereof). This results in the rear surface of the attachment member being substantially flush with the side edge of the first bracket part when fitted, thereby creating a snug fit in use.

The second recess portion of the first bracket part is defined in a side edge and upper surface of the second bracket part.

In one embodiment the upper surface of the protrusion member of the second bracket part at or adjacent the free end or leading edge thereof has an angled surface or surface which tapers downwardly or has a narrowing taper towards the lower surface. This provides a leading edge that increases the ease with which the protrusion member can be inserted into the recess defined in the first bracket part.

Preferably the angled surface is only a minor portion (i.e. less than ¼ of the upper surface of the protrusion member), such that the tight or snug fit of the remainder portion of the protrusion member in the recess of the first bracket part is not affected when fitted. The remaining major part of the upper surface of the protrusion member is typically substantially planar in form.

Preferably the front or leading edge of the protrusion member of the second bracket part is substantially curved at the corners thereof or is substantially convexed or hemispherical in shape. This increases the ease with which the protrusion member can be inserted into the recess defined in the first bracket part.

The bracket assembly can be formed from any or any combination of suitable material, such as wood, metal, plastic and/or the like. In a preferred embodiment the bracket assembly is formed from steel.

In one embodiment one or more markings or indication means are provided on the first bracket part and/or the second bracket part to allow correct alignment of said part or parts during the fitting process.

Preferably the one or more markings or indication means include a centre line, slot and/or the like provided substantially centrally of the first and/or second bracket part. These markings coincide with the centre of the protrusion part and recess in a preferred embodiment.

Preferably the dimensions of the attachment means and/or apertures are such that a margin of error is allowed for the fitter not fitting the first and second bracket parts accurately on the respective items in use.

In a preferred embodiment the first and second items to which the first and second bracket parts are attached to are an end panel of a furniture unit and a furniture plinth respectively. Preferably the furniture unit and plinth is a kitchen base cabinet and a plinth for the same.

It will be appreciated that the first and second items could be any suitable items and the bracket assembly can be used on any joint between said items, whether internal or external.

In one embodiment the bracket assembly is provided with locking means such that once the second bracket part engages with the first bracket part, the locking means lock the two parts together.

In on example, the locking means cannot be unlocked following locking of the same (i.e. the locking means is one way or irreversible).

In one example, the locking means can be unlocked following locking of the same (i.e. the locking means is reversible). The locking means is therefore movable between a locked position, wherein separation of the first and second bracket parts is prevented, and an unlocked position, wherein the first and second bracket parts can be disengaged and/or separated.

In one embodiment one or more recesses, apertures, slots and/or channels are defined in the first and/or second bracket parts to allow for the location of the locking means therein in use.

In one embodiment the locking means includes a locking pin having a head portion and a body portion. The head portion typically protrudes outwardly of the sides of the body portion, thereby providing a shoulder portion or flange between the base of the head portion and the side walls of the body portion.

Preferably the head portion is located at one end of the locking pin and the body portion extends outwardly or away from a lower surface or base of the head portion.

Preferably a locking recess, aperture, slot or channel is defined in at least an upper surface of the protrusion member of the second bracket part. This locking recess, aperture, slot or channel is of such shape and/or dimensions to allow for the location of the head portion of the locking pin therein in use.

Preferably a locking recess, aperture, slot or channel is defined in the first bracket part. This locking recess, aperture or channel allows for the location of the body portion of the locking pin therein in use.

Preferably the dimension(s) or width of the locking recess, aperture or channel defined in the first bracket part is smaller than the dimension(s) or width of the locking recess, aperture or channel defined in the second bracket part, so that the head portion of the locking pin is too large to pass through or into the locking recess, aperture or channel defined in the first bracket but the body portion of the locking pin can pass into the locking recess, aperture or channel. In one example, the shoulder portion defined between the head portion and body portion of the locking pin engages with the lower surface defining the recess portion of the first bracket part.

The dimension(s) or width of the locking recess, aperture or channel defined in the second bracket part is of such dimensions so that the head portion of the locking pin can sit therein. A margin of error can be provided for in the dimensions so that if the bracket parts are fitted incorrectly, the locking pin will still locate in the correct location in the second bracket part and first bracket part.

With the locking pin located in the respective locking recess, aperture or channel of the first and second bracket parts, the locking pin is sandwiched between the first and second bracket parts and prevents removal of the protrusion member of the second bracket part from the recess of the first bracket part.

In one embodiment the locking means includes biasing means provided on one of the first and/or second bracket parts which engages with a surface of the other of the first and/or second bracket parts when the two parts are moved into engagement with each other.

The locking means is typically biased to a protruding position or locked position in normal use. When the first and second bracket parts are moved into engagement with each other, the biasing means is initially moved to an unlocked position, a relative recessed position and/or a substantially non-protruding position. On completion of the engagement between the first and second bracket parts, the locking means is biased from the unlocked position to the locked position.

A user can move the biasing means against the biasing force to unlock the locking means in one example via the application of force thereto.

In one embodiment the biasing means is in the form of a resiliently biased tongue or flange. The resilient biasing force can be as a result of the natural resilience of the material from which the locking means is formed or can be as a result of resilient biasing means, such as a spring and/or the like.

The resiliently biased tongue or flange provided on one of the bracket parts can block the disengagement or movement of the other bracket part relative thereto once engaged.

The biased tongue or flange on one of the bracket parts typically engages in a recess, slot, aperture or channel in the other bracket member when in a locked position. The tongue or flange is preferably biased to an outwardly protruding position from the surface of the bracket member on which it is provided/formed.

In one embodiment the locking means includes a resiliently biased tongue or flange provided at or adjacent a front edge of the protrusion member of the second bracket part which engages with a front edge of the first bracket part when the bracket parts are moved into engagement with each other.

According to a second aspect of the present invention there is provided a method of using a bracket assembly for joining two items together according to claim 11.

Thus, it can be appreciated that the present invention provides a high precision bracket assembly that forms a tight fit to securely and accurately fit two items together.

Embodiments of the present invention will now be described with reference to the accompanying figures, wherein:
Figure 1a is a top perspective view of the bracket assembly when separated in one embodiment of the present invention;
Figure 1b is a base perspective view of the first bracket part of the bracket assembly;
Figure 2 illustrates the bracket assembly fitted to two items in use;
Figures 3a-3d show simplified drawings showing the method steps involved in fitting the bracket assembly;
Figure 4 shows a perspective view of the bracket assembly when separated according to a second embodiment of the present invention;
Figure 5a shows an example of locking means according to an embodiment of the present invention;
Figure 5b shows an end view of the locking means located in the bracket assembly in figure 4 when locked;
Figure 6a shows a further example of locking means according to an embodiment of the present invention in a locked position;
Figure 6b shows an end view of the locking means of figure 6a when in locked position;
Figure 6c shows a perspective view of the second bracket part showing the locking means.

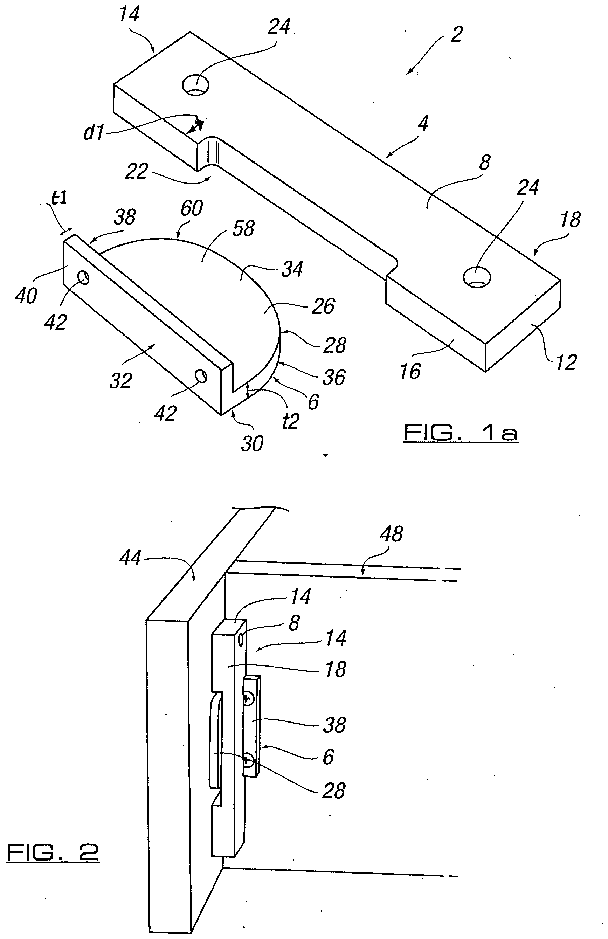

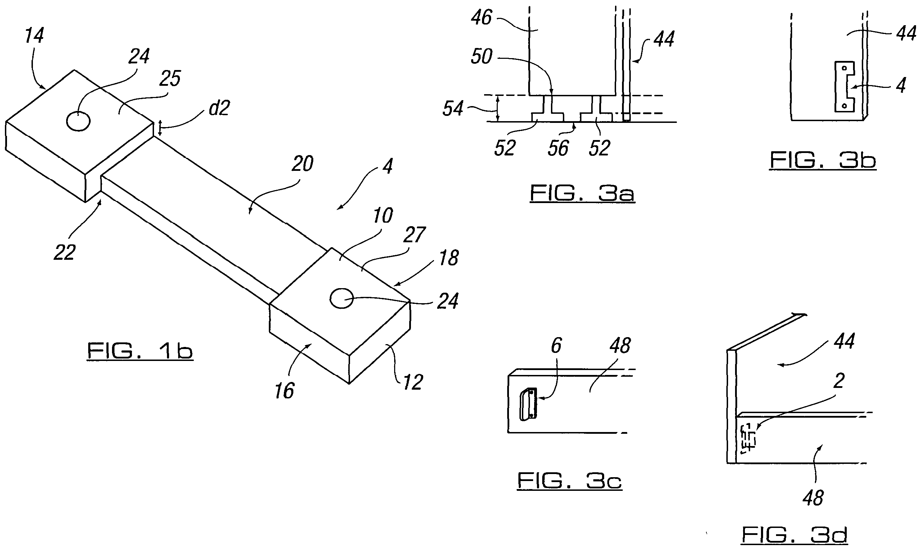

Referring to figures 1a-3d, there is illustrated a corner bracket assembly 2 including a first bracket part 4 and a second bracket part 6. The corner bracket assembly is for joining a plinth 48 to an end panel of a cupboard unit 46 in use, as will be described in more detail below.

The first bracket part 4 has an upper surface 8, lower surface 10, first and second ends 12, 14, a first side edge 16 and second side edge 18.

A first recess portion 20 is defined adjacent lower surface 10 so that the opening to the first recess portion is defined by edges of the lower surface 10 and first and second side edges 16, 18. A second recess portion 22 is defined adjacent first side edge 16 and in upper surface 8. The first and second recess portions 20, 22 are continuous or are in communication with each other.

Thus, in the illustration recess portions 20, 22 is defined substantially centrally between two end portions 25, 27.

Securing means in the form of two screw holes 24 are defined in end portions 25, 27 between upper and lower surfaces 8, 10. The opening to the screw holes of upper surface 8 can be flared outwardly to increase the ease with which securing screws can be located in said screw holes in use.

The first bracket part 4 is shown as being substantially rectangular but could be any suitable size and/or shape.

The second bracket part 6 is substantially L-shaped in form and includes a protrusion member 26 having a first free end 28 and a second end 30 joined to an attachment member 32. The attachment member is substantially perpendicular to protrusion member 26.

Protrusion member 26 has an upper surface 34 and a lower surface 36. Attachment member 32 has a front surface 38 and a rear surface 40.

Attachment means in the form of two screw holes 42 are defined between front and rear surfaces 38, 40 of the attachment member 32. These screw holes 42 are typically located towards outer edges of the attachment member in the illustrated example.

In use in one embodiment, the bracket assembly 2 is used to fit an end panel 44 of a kitchen base unit 46 to a kitchen plinth 48. The kitchen base unit 46 has a base 50 and support legs 52 supporting the base unit a pre-defined distance 54 above a floor surface 56.

The end panel 44 is typically propped up against base unit 46 in the position it will take, as shown in figure 3a, and the front of the support leg 52 and the base 50 of base unit 46 is marked on the end panel 44. The first bracket part 4 is then attached to the outer surface of end panel 44 at the centre of these marks, as shown in figure 3b. The second bracket part 6 is attached to the inner surface of the plinth, as shown in figure 3c. The plinth 48 and end panel 44 are brought together and protrusion member 26 of second bracket part 6 is located in the recess 20 defined between the lower surface of the first bracket part 4 and the end panel. The front surface 38 of attachment member 32 engages against the front edge of recess portion 22.

Centre line markings can be provided on the first and/or second bracket parts and these markings can be used to position the second bracket part 6 in the correct position on the plinth 48.

The final bracket assembly is both rigid and strong and a snug fit can be formed between the first and second bracket parts. The bracket assembly is typically for forming a corner joint between two items to be joined together in use. An error margin can be built into the dimensions of the first and second bracket parts if required. However, in a preferred embodiment a precision fit is formed between the first and second bracket parts. For example, the depth (d1) of the second recess portion 22 of the first bracket part is typically substantially equal to the thickness (t1) of the attachment member 32 of the second bracket part. As such, the rear surface 40 of attachment member 32 typically sits substantially flush with side edge 16 of first bracket part 4 in use. The depth (d2) of the first recess portion 20 of the first bracket part is typically equal to the thickness (t2) of the protrusion member 26 of the second bracket part. As such, the lower surface 36 of protrusion member 26 typically sits substantially flush with lower surface 10 of first bracket part 4 in use.

It is noted that the first recess 20 passes between the first and second side edges 16, 18 of the first bracket part but could finish short of side edge 18 if required.

The upper surface 34 of protrusion member 26 can taper downwardly towards lower surface 36 adjacent leading edge 28 to increase the ease with which the protrusion member 26 can be inserted into recesses 20, 22 in use, as shown by angled edge 58. In addition, the corners 60 of the leading edge 28 could be curved to increase the ease with which protrusion member 26 can be inserted into recesses 20, 22 in use.

The securing or attachment means on the first and/or second bracket parts could be made elongate in form in order to increase the margin of error in marking out the positions of the bracket. This allows a little bit of adjustment to be made when positioning the bracket parts on the items.

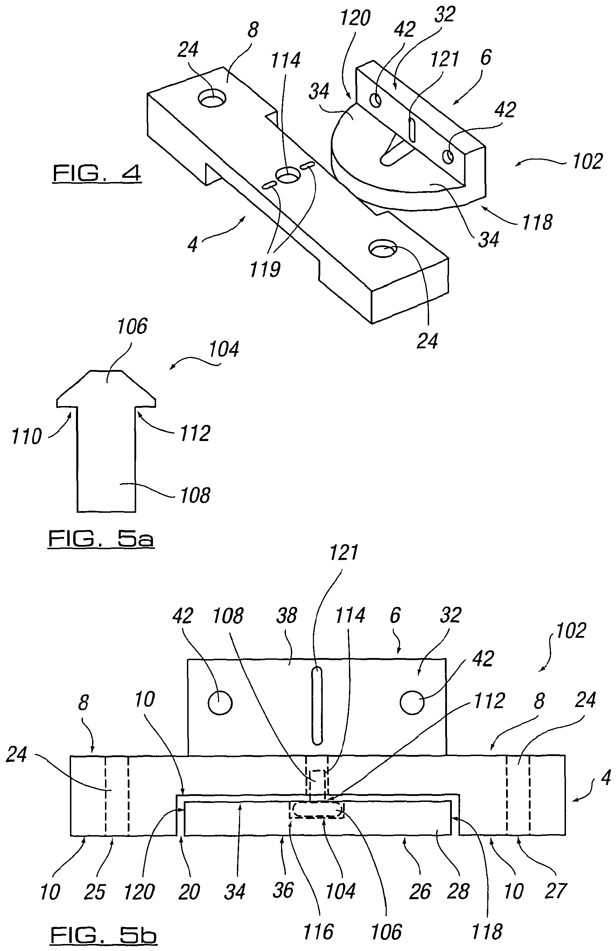

The bracket assembly is preferably used in a substantially vertical arrangement in use, such that the longitudinal axis of the brackets parts is substantially parallel to the vertical axis, as shown in figure 2. Thus, this bracket assembly does not require gravity to ensure correct attachment between the bracket parts. Referring to figures 4-5b, there is illustrated a further embodiment of a bracket assembly 102 including locking means. The locking means locks the first and second bracket parts 4, 6 together so as to prevent detachment of the same in use. Once the locking means are locked, the locking means typically cannot be unlocked in one example (i.e. locking is irreversible).

The same reference numerals are used to refer to the same features of the bracket assembly as defined in the first embodiment.

The locking means in this example is in the form of a locking pin 104 comprising a head portion 106 at a first end and a body portion 108 extending outwardly from a base 110 of head portion 106. The base 110 of the head portion 106 has a larger cross section area or width than the top of the body portion 108, thereby forming a shoulder portion or flange 112 between the base of the head portion and the top of the body portion. The flange 112 typically is provided around the entire perimeter of the body portion in this example.

The first bracket 4 has a locking channel 114 defined between upper surface 8 and the lower surface 10 of the recess portion 20. The locking channel 114 is of such dimensions that it can fit the body portion 108 of locking pin 104 therein but is too small to allow the location of the head portion 106 therein. A margin of error is typically built into the dimensions so that if the first and second brackets 4, 6 are not in correct alignment when brought into engagement together, the locking pin 104 will still locate in locking channel 114.

The protrusion member 26 of the second bracket 6 has a locking aperture 116 defined between upper surface 34 and lower surface 36 thereof. The dimensions of the locking aperture 116 are such that head portion 106 of locking pin 104 can fit therein in use. A margin of error is typically built into the dimensions so that if the first and second brackets 4, 6 are not in correct alignment when brought into engagement together, the locking pin 104 will still locate in locking aperture 116.

The locking channel 114 and locking aperture 116 are arranged on the first and second brackets such that the centres of the channel and aperture are substantially aligned when the first and second brackets are engaged together. In the illustration, the locking channel 114 is provided is provided substantially centrally of the recess 20 and the locking aperture 116 is provided substantially centrally between the two sides 118, 120 of the protrusion member 26. The rear of the locking aperture 116 is typically adjacent the attachment member 32 and the front of the aperture 116 is provided midway between the attachment member and the free end 28 of the protrusion member 26.

Centre lines 119, 121 can be provided on the top surface 8 of the first bracket part 4 and the front surface 38 of the second bracket part 6 respectively. These allow a fitter to correctly align and position the first and second brackets on the respective items to which they are to be attached. The centre lines 119, 121 should ideally be aligned with each other when the bracket parts are moved into engagement with each other if the bracket parts have been fitted correctly on the items.

During fitting, the second bracket part 6 is attached to a suitable item as previously described and the head portion 106 of the locking pin 104 is located in locking aperture 116, such that body portion 108 extends upwardly from top surface 34 of the protrusion member. The recess 20 of first bracket portion 4 is located over the protrusion member 34 such that the body portion 108 of the locking pin 104 engages in locking channel 114. The first bracket portion 4 is attached to a suitable item in use. As such, the locking pin is sandwiched between the first and second bracket parts and the shoulder portion 112 of the locking pin prevents the pin from moving into the locking channel.

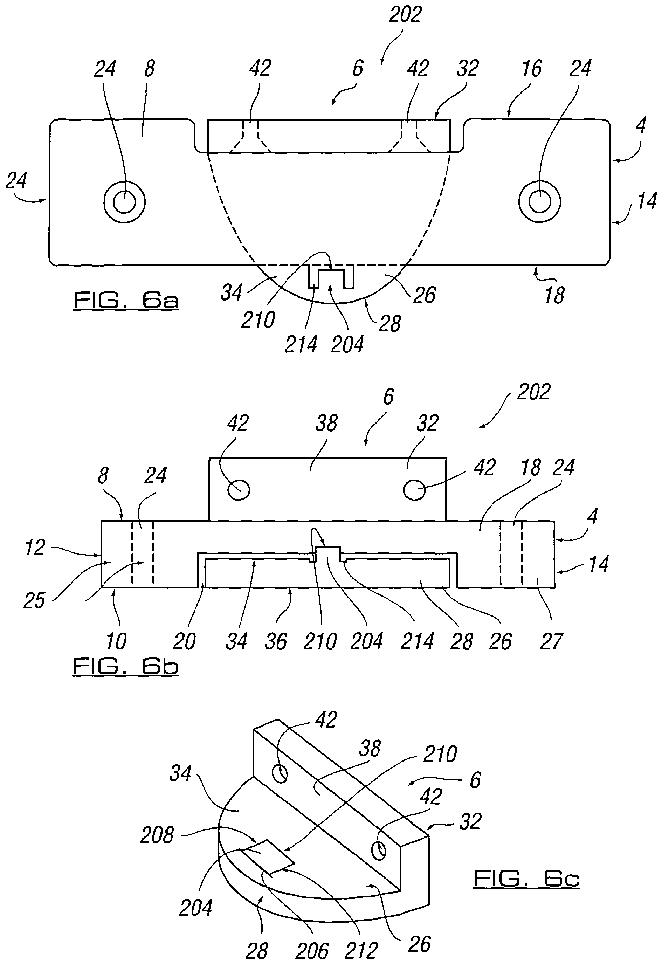

Referring to figures 6a-6c, there is illustrated a further embodiment of a bracket assembly 202 including locking means. The locking means locks the first and second bracket parts 4, 6 together so as to prevent detachment of the same in use. Once the locking means are locked, the locking means can be moved to an unlocked position as described in more detail below.

The same reference numerals are used to refer to the same features of the bracket assembly as defined in the first embodiment.

The bracket assembly 202 is in a similar format to the assembly shown in figures 1a-3d but a resilient biased tongue 204 is provided on top surface 34 of protrusion member 26 of the second bracket part 6. The tongue 204 is biased to an upwardly protruding position in normal use as a result of the natural bias of the material form which the protrusion member and/or tongue 204 is formed. However, resilient biasing means, such as a spring or similar object can be provided to bias the tongue to an upward position if required.

The tongue 204 is joined to surface 34 along a front edge 206. The remaining sides 208, 210, 212 of tongue 204 are free edges cut out from surface 34 and/or located in an aperture 214 defined in surface 34. Rear edge 210 of tongue 204 protrudes upwardly towards front surface 38 of attachment member 32. On insertion of front edge 28 of protrusion member 26 of second bracket part 6 into recess 20 of side 16 of first bracket part 4, tongue 204 is pushed against the bias of the material to a downwardly or unlocked position (i.e. towards top surface 34). This is typically as a result of edge 206 of tongue 204 entering recess 20 first. The length of protrusion member 26 is such that front edge 28 protrudes outwardly from side 18 of first bracket 4 when fully engaged with first bracket part 4. Once tongue 204 has moved through recess 20 and is moved clear of first bracket part 4 on side 18, the biasing force of tongue 204 causes 204 to move upwardly towards an upwardly biased or locked position, as shown in figure 6b. Rear edge 210 of tongue 204 engages with side wall 18 of first bracket part 4 adjacent the top of recess 20, thereby preventing disengagement of first and second bracket parts 4, 6 from each other until a user depresses tongue 204 downwardly (i.e. towards top surface 34) to below the side wall 18 of first bracket part 4. A user can depress 204 using their finger or a suitable tool.

## Claims

1. A bracket assembly (2, 102, 202), said bracket assembly including a first bracket part (4) and a second bracket part (6), said first bracket part (4) having an upper surface (8), a lower surface (10), first and second ends (12, 14), a first side edge (16) and a second side edge (18), said first bracket part (4) having a recess defined therein in which a protrusion member (26) of the second bracket part (6) is engaged therein in use, the recess of the first bracket part(4) having a first recess portion (20) defined in the lower surface (10) of the bracket part, wherein the depth of the first recess portion (20) of the first bracket part (4) is equal to the depth or thickness of the protrusion member (26) of the second bracket part (6) so that a lower surface (36) of the protrusion member (26) is flush with the lower surface (10) of the first bracket part (4) when fitted, wherein the first bracket part (4) has securing means for allowing the first bracket part (4) to be secured to a first item in use, said second bracket part further including an attachment member (32) provided at an acute angle or substantially perpendicular to the protrusion member (26), said attachment member (32) provided with attachment means for allowing attachment of the second bracket part (6) to a second item in use and the attachment means include any or any combination of one or more apertures (42) or elongate slots for the location of one or more screws therein, one or more screws, nuts and bolts, clips, or inter-engaging members, **characterised in that** the recess of the first bracket part(4) further includes a second recess portion (22) defined in the first side edge (16) and upper surface (8) of the first bracket part (4)and wherein the depth of the second recess portion (22) of the first bracket part (4) between the first side edge (16) and a base of the second recess portion (22) in the upper surface (8) is equal to the depth or thickness of the attachment member (32) of the second bracket part (6), so that a rear surface (40) of the attachment member (32) is flush with the first side edge (16) of the first bracket part (4) when fitted, the first and second recess portions (20, 22) are defined centrally between two end portions (25, 27) in the first bracket part (4), the securing means of the first bracket part in the form of two screw holes (24) defined in the end portions (25, 27) between the upper and lower surfaces (8, 10).

2. A bracket assembly according to claim 1 wherein the protrusion member (26) of the second bracket part (6) is detachably engaged in the recess of the first bracket part (4).

3. A bracket assembly according to claim 1 wherein an upper surface (34) of the protrusion member (26) of the second bracket part (6) has a downwardly tapering surface towards a lower surface (36) of said member at or adjacent a free edge or leading edge (28) of said protrusion member (26) and/or the front or leading edge (28) of the protrusion member (26) of the second bracket part (6) is substantially curved at the corners thereof, is substantially convexed or hemispherical in shape.

4. A bracket assembly according to claim 1 wherein one or more markings or indication means are provided on the first and/or second bracket parts (4, 6) to allow correct alignment of the bracket parts (4, 6) during a fitting process.

5. A bracket assembly according to claim 1 wherein the first and second items to which the first and second bracket parts (4, 6) are attached to in use are an end panel of a furniture unit (46) and a furniture plinth (48) respectively.

6. A bracket assembly according to claim 1 wherein locking means are provided to lock the first and second bracket parts (4, 6) together when said parts are brought into engagement in use.

7. A bracket assembly according to claim 6 wherein the locking means are irreversibly locked in use or the locking means is movable between a locked position, wherein the separation of the first and second bracket parts (4, 6) is prevented, and an unlocked position, wherein the first and second bracket parts (4, 6) can be disengaged and/or separated.

8. A bracket assembly according to claim 6 wherein the locking means includes a locking pin (104) having a head portion (106) and a body portion (108), said head portion (106) protruding outwardly of the sides of the body portion to define a shoulder portion or flange (112) between a base (110) of the head portion (106) and the sides of the body portion (108) and wherein a locking recess, aperture, slot or channel (116) is defined in at least an upper surface (34) of the protrusion member (26) of the second bracket part (6) and is of such dimensions and/or shape to allow for the location of the head portion (106) of the locking pin (104) therein in use, and a locking recess, aperture, slot or channel (114) is defined in the first bracket part (4) for the location of the body portion (108) of the locking pin (104) in use.

9. A bracket assembly according to claim 6 wherein the locking means includes biasing means provided on one of the first and/or second bracket part (4, 6) which engages with a surface on the other of the first and/or second bracket part (4, 6) when the bracket parts are moved into engagement with each other in use, and wherein the biasing means is biased to a locked position in normal use.

10. A bracket assembly according to claim 9 wherein the biasing means includes a biased tongue 204 or flange which is outwardly biased from a surface of one of the first or second bracket parts (4, 6) for engagement in a recess, slot, aperture or channel in the other of the first or second bracket parts (4, 6).

11. A method of using a bracket assembly (2, 102, 202) for joining two items together, said method including the steps of fitting a first bracket part (4) to a first item using securing meansand fitting a second bracket part (6) to a second item via an attachment member (32) including attachment means, the attachment means including any or any combination of one or more apertures (42) or elongate slots for the location of one or more screws therein, one or more screws, nuts and bolts, clips, or inter-engaging members, locating a protrusion member (26) of the second bracket part (6) in a recess defined in the first bracket part (4) to join the first and second items together, said first bracket part (4) having an upper surface (8) a lower surface (10), first and second ends (12, 14), a first side edge (16) and a second side edge (18), the attachment member (32) of the second bracket part (6) provided at an acute angle or substantially perpendicular to the protrusion member (26), the recess of the first bracket part (4) having a first recess portion (20) defined in the lower surface (10) of the bracket part, wherein the depth of the first recess portion (20) of the first bracket part (4) is equal to the depth or thickness of the protrusion member (26) of the second bracket part (6) so that a lower surface of the protrusion member is flush with the lower surface (10) of the first bracket part (4) when fitted, **characterised in that** the recess of the first bracket part (4) further includes a second recess portion (22) defined in the first side edge (16) and upper surface (8) of the first bracket part (4), and wherein the depth of the second recess portion (22) of the first bracket part (4) between the first side edge (16) and a base of the second recess portion (22) in the upper surface (8) is equal to the depth or thickness of the attachment member (32) of the second bracket part (6) so that a rear surface (40) of the attachment member (32) is flush with the first side edge (16) of the first bracket part (4) when fitted , the first and second recess portions (20, 22) are defined centrally between two end portions (25, 27) in the first bracket part (4), the securing means of the first bracket part in the form of two screw holes (24) defined in the end portions (25, 27) between the upper and lower surfaces (8, 10).

## Patentansprüche

1. Halterungsanordnung (2, 102, 202), wobei die genannte Halterungsanordnung ein erstes Halterungsteil (4) und ein zweites Halterungsteil (6) beinhaltet, wobei das genannte erste Halterungsteil (4) eine obere Oberfläche (8), eine untere Oberfläche (10), ein erstes und ein zweites Ende (12, 14), einen ersten Seitenrand (16) und einen zweiten Seitenrand (18) beinhaltet, das genannte erste Halterungsteil (4) eine darin definierte Aussparung hat, in der ein Vorsprungsstück (26) des zweiten Halterungsteils (6) im Gebrauch in Eingriff ist, die Aussparung des ersten Halterungsteils (4) einen ersten Aussparungsteil (20) hat, der in der unteren Oberfläche (10) des Halterungsteils definiert ist, wobei die Tiefe des ersten Aussparungsteils (20) des ersten Halterungsteils (4) gleich der Tiefe oder Dicke des Vorsprungsstücks (26) des zweiten Halterungsteils (6) ist, so dass eine untere Oberfläche (36) des Vorsprungsstücks (26) mit der unteren Oberfläche (10) des ersten Halterungsteils (4) bündig ist, wenn eingebaut, wobei das erste Halterungsteil (4) Befestigungsmittel hat, damit im Gebrauch der erste Halterungsteil (4) an einem ersten Artikel befestigt werden kann, das genannte zweite Halterungsteil ferner ein Anbringungsstück (32) beinhaltet, das in einem spitzen Winkel oder im Wesentlichen lotrecht zu dem Vorsprungsstück (26) bereitgestellt ist, das genannte Anbringungsstück (32) dabei mit Anbringungsmitteln versehen ist, damit im Gebrauch das zweite Halterungsteil (6) an einem zweiten Artikel angebracht werden kann, und die Anbringungsmittel jedwede oder eine Kombination von einer bzw. einem oder mehr Öffnungen (42) oder Längsschlitzen zur Positionierung von einer oder mehr Schrauben darin, einer oder mehr Schrauben, Muttern und Bolzen, Klammern oder miteinander verrastenden Elementen beinhalten, **dadurch gekennzeichnet, dass** die Aussparung des ersten Halterungsteils (4) ferner einen zweiten Aussparungsteil (22) beinhaltet, der in dem ersten Seitenrand (16) und der oberen Oberfläche (8) des ersten Halterungsteils (4) definiert ist, und wobei die Tiefe des zweiten Aussparungsteils (22) des ersten Halterungsteils (4) zwischen dem ersten Seitenrand (16) und einer Basis des zweiten Aussparungsteils (22) in der oberen Oberfläche (8) gleich der Tiefe oder Dicke des Anbringungsstücks (32) des zweiten Halterungsteils (6) ist, so dass eine hintere Oberfläche (40) des Anbringungsstücks (32) mit dem ersten Seitenrand (16) des ersten Halterungsteils (4) bündig ist, wenn eingebaut, der erste und der zweite Aussparungsteil (20, 22) mittig zwischen zwei Endteilen (25, 27) in dem ersten Halterungsteil (4) definiert sind, die Befestigungsmittel des ersten Halterungsteils die Form von zwei Schraubenlöchern (24) haben, die in den Endteilen (25, 27) zwischen der oberen und der unteren Oberfläche (8, 10) definiert sind.

2. Halterungsanordnung nach Anspruch 1, wobei das Vorsprungsstück (26) des zweiten Halterungsteils (6) abnehmbar in der Aussparung des ersten Halterungsteils (4) in Eingriff ist.

3. Halterungsanordnung nach Anspruch 1, wobei eine obere Oberfläche (34) des Vorsprungsstücks (26) des zweiten Halterungsteils (6) zu einer unteren Oberfläche (36) des genannten Stücks an oder angrenzend an einen freien Rand oder einen vorderen Rand (28) des genannten Vorsprungsstücks (26) eine nach unten abgeschrägte Oberfläche hat und/oder der Front- oder vordere Rand (28) des Vorsprungsstücks (26) des zweiten Halterungsteils (6) im Wesentlichen an seinen Ecken gekrümmt ist, im Wesentlichen eine gewölbte oder halbkugelförmige Form hat.

4. Halterungsanordnung nach Anspruch 1, wobei am ersten und/oder zweiten Halterungsteil (4, 6) eine oder mehr Markierungen oder Anzeigemittel bereitgestellt sind, um die richtige Ausrichtung der Halterungsteile (4, 6) während eines Einbauvorgangs zu ermöglichen.

5. Halterungsanordnung nach Anspruch 1, wobei der erste und der zweite Artikel, an dem der erste und der zweite Halterungsteil (4, 6) im Gebrauch angebracht sind, eine Endplatte einer Möbeleinheit (46) bzw. ein Möbelsockel (48) sind.

6. Halterungsanordnung nach Anspruch 1, wobei Verriegelungsmittel zum Verriegeln des ersten und des zweiten Halterungsteils (4, 6) miteinander, wenn die genannten Teile im Gebrauch in Eingriff gebracht werden, bereitgestellt sind.

7. Halterungsanordnung nach Anspruch 6, wobei die Verriegelungsmittel im Gebrauch irreversibel verriegelt sind oder das Verriegelungsmittel zwischen einer verriegelten Stellung, in der die Trennung des ersten und des zweiten Halterungsteils (4, 6) verhindert wird, und einer entriegelten Stellung, in der das erste und das zweite Halterungsteil (4, 6) außer Eingriff gebracht und/oder getrennt werden können, bewegbar ist.

8. Halterungsanordnung nach Anspruch 6, wobei das Verriegelungsmittel einen Verriegelungsstift (104) mit einem Kopfabschnitt (106) und einem Körperabschnitt (108) beinhaltet, der genannte Kopfabschnitt (106) dabei von den Seiten des Körperabschnitts nach außen vorsteht, um einen Schulterteil oder Flansch (112) zwischen einer Basis (110) des Kopfabschnitts (106) und den Seiten des Körperabschnitts (108) zu definieren, und wobei ein(e) Verriegelungsaussparung, - öffnung, -schlitz oder -nut (116) wenigstens in einer oberen Oberfläche (34) des Vorsprungsstücks (26) des zweiten Halterungsteils (6) definiert ist und dergestalt dimensioniert und/oder geformt ist, dass sie/er im Gebrauch die Positionierung des Kopfabschnitts (106) des Verriegelungsstifts (104) darin zulässt, und ein(e) Verriegelungsaussparung, -öffnung, -schlitz oder -nut (114) in dem ersten Halterungsteil (4) zur Positionierung des Körperabschnitts (108) des Verriegelungsstifts (104) im Gebrauch definiert ist.

9. Halterungsanordnung nach Anspruch 6, wobei das Verriegelungsmittel ein an einem von dem ersten und/oder zweiten Halterungsteil (4, 6) bereitgestelltes Vorspannmittel beinhaltet, das mit einer Oberfläche an dem anderen von dem ersten und/oder zweiten Halterungsteil (4, 6) in Eingriff kommt, wenn die Halterungsteile in Eingriff miteinander bewegt werden, und wobei das Vorspannmittel im normalen Gebrauch zu einer verriegelten Stellung hin vorgespannt ist.

10. Halterungsanordnung nach Anspruch 9, wobei das Vorspannmittel eine(n) vorgespannte(n) Zunge (204) oder Flansch beinhaltet, die/der von einer Oberfläche von einem von dem ersten oder zweiten Halterungsteil (4, 6) nach außen vorgespannt ist für den Eingriff in einer/einem Aussparung, Schlitz, Öffnung oder Nut in dem anderen von dem ersten oder zweiten Halterungsteil (4, 6).

11. Verfahren zur Verwendung einer Halterungsanordnung (2, 102, 202) zum Zusammenfügen von zwei Artikeln, wobei das genannte Verfahren die folgenden Schritte beinhaltet: Montieren eines ersten Halterungsteils (4) an einem ersten Artikel unter Verwendung von Befestigungsmitteln und Montieren eines zweiten Halterungsteils (6) an einem zweiten Artikel über ein Anbringungselement (32), das Anbringungsmittel, wobei die Anbringungsmittel jedwede oder eine Kombination von einer bzw. einem oder mehr Öffnungen (42) oder Längsschlitzen zur Positionierung von einer oder mehr Schrauben darin, eine oder mehr Schrauben, Muttern und Bolzen, Klammern oder miteinander verrastende Elementen beinhalten, Positionieren eines Vorsprungsstücks (26) des zweiten Halterungsteils (6) in einer Aussparung, die in dem ersten Halterungsteil (4) definiert ist, um den ersten und den zweiten Artikel zusammenzufügen, wobei das genannte erste Halterungsteil (4) eine obere Oberfläche (8), eine untere Oberfläche (10), ein erstes und ein zweites Ende (12, 14), einen ersten Seitenrand (16) und einen zweiten Seitenrand (18) hat, das Anbringungsstück (32) des zweiten Halterungsteils (6) in einem spitzen Winkel oder im Wesentlichen lotrecht zu dem Vorsprungsstück (26) bereitgestellt ist, die Aussparung des ersten Halterungsteils (4) einen ersten Aussparungsteil (20) hat, der in der unteren Oberfläche (10) des Halterungsteils definiert ist, wobei die Tiefe des ersten Aussparungsteils (20) des ersten Halterungsteils (4) gleich der Tiefe oder Dicke des Vorsprungsstücks (26) des zweiten Halterungsteils (6) ist, so dass eine untere Oberfläche (36) des Vorsprungsstücks (26) mit der unteren Oberfläche (10) des ersten Halterungsteils (4) bündig ist, wenn eingebaut, **dadurch gekennzeichnet, dass** die Aussparung des ersten Halterungsteils (4) ferner einen zweiten Aussparungsteil (22) beinhaltet, der in dem ersten Seitenrand (16) und der oberen Oberfläche (8) des ersten Halterungsteils (4) definiert ist, und wobei die Tiefe des zweiten Aussparungsteils (22) des ersten Halterungsteils (4) zwischen dem ersten Seitenrand (16) und einer Basis des zweiten Aussparungsteils (22) in der oberen Oberfläche (8) gleich der Tiefe oder Dicke des Anbringungsstücks (32) des zweiten Halterungsteils (6) ist, so dass eine hintere Oberfläche (40) des Anbringungsstücks (32) mit dem ersten Seitenrand (16) des ersten Halterungsteils (4) bündig ist, wenn eingebaut, der erste und der zweite Aussparungsteil (20, 22) mittig zwischen zwei Endteilen (25, 27) in dem ersten Halterungsteil (4) definiert sind, die Befestigungsmittel des ersten Halterungsteils die Form von zwei Schraubenlöchern (24) haben, die in den Endteilen (25, 27) zwischen der oberen und der unteren Oberfläche (8, 10) definiert sind.

## Revendications

1. Ensemble console (2, 102, 202), ledit ensemble console incluant une première partie de console (4) et une deuxième partie de console (6), ladite première partie de console (4) possédant une surface supérieure (8), une surface inférieure (10), des première et deuxième extrémités (12, 14), un premier bord latéral (16) et un deuxième bord latéral (18), ladite première partie de console (4) possédant un évidement qui y est défini dans lequel un élément en saillie (26) de la deuxième partie de console (6) est emboîté dans celui-ci lors de l'utilisation, l'évidement de la première partie de console (4) possédant une première portion d'évidement (20) définie dans la surface inférieure (10) de la partie de console, cas dans lequel la profondeur de la première portion d'évidement (20) de la première partie de console (4) est égale à la profondeur ou l'épaisseur de l'élément en saillie (26) de la deuxième partie de console (6), de sorte qu'une surface inférieure (36) de l'élément en saillie (26) soit en affleurement avec la surface inférieure (10) de la première partie de console (4) quand elle est montée, cas dans lequel la première partie de console (4) possède des moyens d'assujettissement pour permettre à la première partie de console (4) d'être assujettie à un premier poste lors de l'utilisation, ladite deuxième partie de console incluant en outre un élément d'attache (32) prévu à un angle aigu ou sensiblement perpendiculaire à l'élément en saillie (26), ledit élément d'attache (32) étant muni de moyens d'attache pour permettre d'attacher la deuxième partie de console (6) à un deuxième poste lors de l'utilisation et les moyens d'attache incluent une quelconque ouverture ou n'importe quelle combinaison d'une ou plusieurs ouvertures (42) ou de fentes allongées pour la localisation d'une ou de plusieurs vis dans celles-ci, une ou plusieurs vis, écrous et boulons, clips ou éléments de solidarisation réciproque, **caractérisé en ce que** l'évidement de la première partie de console (4) inclut en outre une deuxième portion d'évidement (22) définie dans le premier bord latéral (16) et la surface supérieure (8) de la première partie de console (4), et cas dans lequel la profondeur de la deuxième portion d'évidement (22) de la première partie de console (4) entre le premier bord latéral (16) et une base de la deuxième portion d'évidement (22) dans la surface supérieure (8) est égale à la profondeur ou l'épaisseur de l'élément d'attache (32) de la deuxième partie de console (6), de sorte qu'une surface arrière (40) de l'élément d'attache (32) soit en affleurement avec le premier bord latéral (16) de la première partie de console (4) quand elle est montée, les première et deuxième portions d'évidement (20, 22) étant définies centralement entre deux portions d'extrémité (25, 27) dans la première partie de console (4), les moyens d'assujettissement de la première partie de console sous la forme de deux trous de vis (24) étant définis dans les portions d'extrémité (25, 27) entre les surfaces supérieure et inférieure (8, 10).

2. Ensemble console selon la revendication 1, l'élément en saillie (26) de la deuxième partie de console (6) étant emboîté de manière détachable dans l'évidement de la première partie de console (4).

3. Ensemble console selon la revendication 1, une surface supérieure (34) de l'élément en saillie (26) de la deuxième partie de console (6) présentant une surface s'amincissant vers le bas vers une surface inférieure (36) dudit élément au niveau de, ou en position adjacente à un bord libre ou un bord avant (28) dudit élément en saillie (26) et/ou le bord frontal ou avant (28) de l'élément en saillie (26) de la deuxième partie de console (6) est sensiblement incurvé au niveau des coins de celle-ci, étant sensiblement convexe ou hémisphérique en forme.

4. Ensemble console selon la revendication 1, un ou plusieurs marquages ou moyens d'indication étant prévus sur les première et/ou deuxième parties de console (4, 6) pour permettre un alignement correct des parties de console (4, 6) au cours d'un processus de montage.

5. Ensemble console selon la revendication 1, les premier et deuxième postes auxquels sont attachées les première et deuxième parties de console (4, 6) lors de l'utilisation étant un panneau d'extrémité d'une unité de mobilier (46) et d'une plinthe de mobilier (48) respectivement.

6. Ensemble console selon la revendication 1, des moyens de verrouillage étant prévus pour verrouiller ensemble les première et deuxième parties de console (4, 6) lorsque lesdites parties sont amenées en solidarisation lors de l'utilisation.

7. Ensemble console selon la revendication 6, les moyens de verrouillage étant verrouillés de manière irréversible lors de l'utilisation ou le moyen de verrouillage étant mobile entre une position verrouillée, où la séparation des première et deuxième parties de console (4, 6) ne peut se faire, et une position déverrouillée, où les première et deuxième parties de console (4, 6) peut être désolidarisées et/ou séparées.

8. Ensemble console selon la revendication 6, le moyen de verrouillage incluant une broche de verrouillage (104) avec une portion tête (106) et une portion corps (108), ladite portion tête (106) faisant saillie vers l'extérieur des côtés de la portion corps afin de définir une portion épaulement ou bride (112) entre une base (110) de la portion tête (106) et les côtés de la portion corps (108), et cas dans lequel un évidement, une ouverture, une fente ou un chenal de verrouillage (116) est défini dans au moins une surface supérieure (34) de l'élément en saillie (26) de la deuxième partie de console (6) et a des dimensions et/ou une forme telles qu'elles permettent de localiser la portion tête (106) de la broche de verrouillage (104) dans celui-ci ou celle-ci en utilisation, et un évidement, une ouverture, une fente ou un chenal de verrouillage (114) est défini dans la première partie de console (4) pour la localisation de la portion corps (108) de la broche de verrouillage (104) en utilisation.

9. Ensemble console selon la revendication 6, le moyen de verrouillage incluant un moyen de sollicitation prévu sur l'une des première et/ou deuxième parties de console (4, 6) qui se solidarise avec une surface sur l'autre des première et/ou deuxième parties de console (4, 6) lorsque les parties de console sont déplacées pour se mettre en solidarisation l'une avec l'autre en utilisation, et le moyen de sollicitation étant sollicité jusqu'à une position verrouillée en utilisation normale.

10. Ensemble console selon la revendication 9, le moyen de sollicitation incluant une languette sollicitée 204 ou une bride qui est sollicitée vers l'extérieur à partir d'une surface d'une partie parmi les première ou deuxième parties de console (4, 6) pour une solidarisation dans un évidement, une fente, une ouverture ou un chenal dans l'autre partie parmi les première ou deuxième parties de console (4, 6).

11. Procédé d'utilisation d'un ensemble console (2, 102, 202) pour joindre ensemble deux postes, ledit procédé incluant les étapes consistant à monter une première partie de console (4) sur un premier poste grâce à l'utilisation de moyens d'assujettissement et à monter une deuxième partie de console (6) sur un deuxième poste par l'intermédiaire d'un élément d'attache (32) incluant des moyens d'attache, les moyens d'attache incluant une quelconque ouverture ou n'importe quelle combinaison d'une ou plusieurs ouvertures (42) ou de fentes allongées pour la localisation d'une ou de plusieurs vis dans celles-ci, une ou plusieurs vis, écrous et boulons, clips ou éléments de solidarisation réciproque, localiser un élément en saillie (26) de la deuxième partie de console (6) dans un évidement défini dans la première partie de console (4) afin de joindre ensemble les premier et deuxième postes, ladite première partie de console (4) possédant une surface supérieure (8), une surface inférieure (10), des première et deuxième extrémités (12, 14), un premier bord latéral (16) et un deuxième bord latéral (18), l'élément d'attache (32) de la deuxième partie de console (6) étant prévu à un angle aigu ou sensiblement perpendiculaire à l'élément en saillie (26), l'évidement de la première partie de console (4) possédant une première portion d'évidement (20) définie dans la surface inférieure (10) de la partie de console, cas dans lequel la profondeur de la première portion d'évidement (20) de la première partie de console (4) est égale à la profondeur ou l'épaisseur de l'élément en saillie (26) de la deuxième partie de console (6), de sorte qu'une surface inférieure de l'élément en saillie soit en affleurement avec la surface inférieure (10) de la première partie de console (4) quand elle est montée, **caractérisé en ce que** l'évidement de la première partie de console (4) inclut en outre une deuxième portion d'évidement (22) définie dans le premier bord latéral (16) et la surface supérieure (8) de la première partie de console (4), et cas dans lequel la profondeur de la deuxième portion d'évidement (22) de la première partie de console (4) entre le premier bord latéral (16) et une base de la deuxième portion d'évidement (22) dans la surface supérieure (8) est égale à la profondeur ou l'épaisseur de l'élément d'attache (32) de la deuxième partie de console (6), de sorte qu'une surface arrière (40) de l'élément d'attache (32) soit en affleurement avec le premier bord latéral (16) de la première partie de console (4) quand elle est montée, les première et deuxième portions d'évidement (20, 22) étant définies centralement entre deux portions d'extrémité (25, 27) dans la première partie de console (4), les moyens d'assujettissement de la première partie de console sous la forme de deux trous de vis (24) étant définis dans les portions d'extrémité (25, 27) entre les surfaces supérieure et inférieure (8, 10).
